Europäisches Patentamt

European Patent Office

Office européen des brevets

(19)

(11) EP 0 776 872 A1

(12) **EUROPÄISCHE PATENTANMELDUNG**

(43) Veröffentlichungstag:
04.06.1997 Patentblatt 1997/23

(51) Int Cl.⁶: **C04B 35/74**, H01H 1/02,
C22C 32/00, C22C 1/10,
B22F 9/30

(21) Anmeldenummer: 96810766.4

(22) Anmeldetag: 11.11.1996

(84) Benannte Vertragsstaaten:
CH DE FR GB LI

(30) Priorität: 30.11.1995 DE 19544697

(71) Anmelder: ABB RESEARCH LTD.
8050 Zürich (CH)

(72) Erfinder: Schüler, Claus, Dr.
8967 Widen (CH)

(74) Vertreter: Rzehak, Herbert et al
Asea Brown Boveri AG
Immaterialgüterrecht(TEI)
Haselstrasse 16/699 I
5401 Baden (CH)

(54) **Metall-Keramik-Kompositwerkstoff und Verfahren zu dessen Herstellung**

(57) Metall-Keramik-Kompositwerkstoffe, welche vorteilhafte Eigenschaften von Keramik und Metall in sich vereinen, lassen sich in der Zusammensetzung $(Mg_{1-x}Cu_x)O + Ag_y$ mit $0,03 \leq x \leq 0,25$ und $0,001 \leq y \leq 0,5$ in einem 1stufigen Verfahren herstellen. Dabei erfolgt das Sintern in Luft bei einer Sintertemperatur im Temperaturbereich von 980 °C-1100 °C bei einer Sinterdauer im Bereich von 1,5 h - 2,5 h. Die Temperaturanstiegs- geschwindigkeit von Zimmertemperatur auf die Sinter- temperatur liegt im Bereich von 8 K/min - 50 K/min. Mit $0,01 \leq y \leq 0,1$ eignen sich derartige Kompositwerkstoffe als Werkstoffe hoher Zähigkeit für reibungsarme, selbst- schmierende Gleitlager, insbesondere aus Keramik. Mit $0,1 \leq y \leq 0,2$ eignen sie sich als elektrische Kontaktwerk- stoffe in Brennstoffzellen und für abriebfeste Gleitkon- takte. Mit $0,15 \leq y \leq 0,5$ weisen die Kompositwerkstoffe eine hohe Leitfähigkeit auf.

**Beschreibung**

TECHNISCHES GEBIET

Bei der Erfindung wird ausgegangen von einem Metall-Keramik-Kompositwerkstoff und von einem Verfahren zu dessen Herstellung nach dem Oberbegriff der Patentansprüche 1 und 4. Die Erfindung betrifft auch Verwendungen des Kompositwerkstoffes.

STAND DER TECHNIK

Mit dem Oberbegriff der Patentansprüche 1 und 4 nimmt die Erfindung auf einen Stand der Technik Bezug, wie er durch A. M. Meier et al., A comparison of the wettability of copper-copper oxide and silver-copper oxide on polycrystalline alumina, Journal of materials science, 30 (1995), S. 4781 - 4786, bekannt ist. Dort wurde bei Tabletten aus Aluminiumoxid ($Al_2O_3$) mit einer Porosität von 30 % ein vollständiges Eindringen von einer Schmelze aus Silber mit einem CuO-Anteil von 5 M% erreicht, wenn die Probe 10 min lang bei einer Temperatur von 1050 °C gehalten wurde. Wenn die Schmelze 20 M% Kupfer, 5 M% Kupferoxid (CuO), Rest Silber, enthielt, dann erfolgte bei 1050 °C kein Eindringen in die Probe, sondern erst bei einer Temperatur von 1250 °C.

Nachteilig dabei ist, daß ein 2stufiges Verfahren zur Herstellung des Kompositwerkstoffes erforderlich ist, welches Vakuum und zur Herstellung der Aluminiumoxidkeramik eine Sintertemperatur von ≈ 1600 °C und somit einen relativ teuren Sinterofen benötigt.

Für zahlreiche Anwendungen sind Werkstoffe wünschenswert, die vorteilhafte Eigenschaften von Keramik und Metall in sich vereinen. Solche Werkstoffe bestehen aus mindestens einer keramischen und einer metallischen Komponente; sie werden auch als CERMET bezeichnet. Nur Kompositwerkstoffe deren metallische Komponenten aus Edelmetallen bestehen, können an Luft gesintert werden; mit allen anderen metallischen Komponenten muß im Vakuum oder in reduzierender Gasatmosphäre gesintert werden.

Die Sintertemperaturen typischer keramischer Komponenten liegen hoch; sie betragen bei $Al_2O_3$ ≈ 1600 °C, bei $ZrO_2$ ≈ 1700 °C und bei MgO ≈ 1600 °C. Gewünscht werden Kompositwerkstoffe, deren Sintertemperatur deutlich tiefer liegt.

DARSTELLUNG DER ERFINDUNG

Die Erfindung, wie sie in den Patentansprüchen 1 und 4 definiert ist, löst die Aufgabe, einen Metall-Keramik-Kompositwerkstoff anzugeben, der in einem 1stufigen Prozeß herstellbar ist und mit einer Sintertemperatur von ≤ 1200 °C völlig dicht gesintert werden kann.

Vorteilhafte Ausgestaltungen der Erfindung sind in den abhängigen Patentansprüchen definiert.

Ein Vorteil der Erfindung besteht darin, daß in Umgebungsluft gesintert werden kann. Zum Sintern des Kompositwerkstoffes genügt ein vergleichsweise billiger Sinterofen mit einer Höchsttemperatur von 1100 °C.

Der erfindungsgemäße Kompositwerkstoff eignet sich als Substratwerkstoff für dünne und dicke Schichten von Hochtemperatursupraleitern. Es gibt keine degradierende Reaktion mit Supraleitern, da sowohl MgO als auch CuO und Silber mit Hochtemperatursupraleitern kompatibel sind.

WEGE ZUR AUSFÜHRUNG DER ERFINDUNG

Zu Magnesiumoxid wird als Sinterhilfsstoff Kupferoxid hinzugefügt und als metallische Komponente Silber in einer Zusammensetzung, die der stöchiometrischen Formel:

$(Mg_{1-x}Cu_x)O + Ag_y$ genügt, mit $0{,}03 \leq x \leq 0{,}25$ und
$0{,}001 \leq y \leq 0{,}5$, vorzugsweise mit $0{,}05 \leq x \leq 0{,}2$.

Die Wahl von y hängt von dem Verwendungszweck des Kompositwerkstoffes ab; es wird:

$0{,}001 \leq y \leq 0{,}03$     für Werkstoffe mit guter elektrischer Isolierfähigkeit und verbesserter Bruchzähigkeit,

$0{,}01 \leq y \leq 0{,}1$     für Werkstoffe mit hoher mechanischer Festigkeit und Bruchzähigkeit, für verschleißarme, reibungsarme, selbstschmierende Werkstoffe in mechanischen Gleitlagern, vorzugsweise aus Keramik,

$0{,}1 \leq y \leq 0{,}2$     für elektrische Kontaktwerkstoffe in Hochtemperatur-Brennstoffzellen und für abriebfreie, verschleißfreie elektrische Kontakte, insbesondere Gleitkontakte,

$0{,}15 \leq y \leq 0{,}5$     für Werkstoffe mit hoher elektrischer und thermischer Leitfähigkeit bei guter mechanischer Festigkeit

verwendet. Der optimale Wert von x wird dann im angegebenen Wertebereich empirisch gefunden. Das Kriterium für optimales x ist die Sinterung bei möglichst niedriger Temperatur zu einer relativen Dichte von $\geq 0{,}95$. Beispielsweise ist für $y = 0{,}15$ ein Wertebereich von $0{,}04 \leq x \leq 0{,}07$ optimal. Die Sintertemperatur von 1080 °C führt dabei zu einer relativen Dichte von $\geq 0{,}96$ bei einer Sinterdauer von 2 h.

Die Sinterung erfolgt an Luft. Die Sintertemperatur sollte möglichst niedrig liegen, da der Dampfdruck von Ag bei dessen Schmelzpunkt von 960 °C bereits $10^4$ Pa beträgt. Bei höheren Temperaturen verdampft das Silber schnell aus dem Kompositwerkstoff. Dadurch können die Verteilung des Silbers im Kompositwerkstoff und damit die Werkstoffeigenschaften inhomogen und das Material technisch unbrauchbar werden.

Mechanische Anwendungen:

Mit $0{,}01 \leq y \leq 0{,}1$ wird die Bruchzähigkeit des Kompositwerkstoffes viel höher als für eine reine MgO-Keramik. Ein solcher Kompositwerkstoff kann mit Vorteil dort eingesetzt werden, wo bei einer Keramik höhere Zug- und Biegefestigkeiten gefordert werden.

Derartige Kompositwerkstoffe weisen selbstschmierende Eigenschaften auf, welche sie als trockene Gleitlager geeignet machen. In Gleitlagern weisen diese Kompositwerkstoffe gute Notlaufeigenschaften auf.

Elektrische Anwendungen:

Mit $y \geq 0{,}08$ wird der Kompositwerkstoff elektrisch leitend und hat bei $y = 0{,}15$ eine Leitfähigkeit von ca. $10^5$ $(\Omega cm)^{-1}$. Da gleichzeitig durch den Silberanteil im Kompositwerkstoff eine gute Bruchzähigkeit erreicht wird, ist ein solcher Kompositwerkstoff vielseitig in bewegten und festen elektrischen Kontakten verwendbar. Vorteilhafte Eigenschaften gegenüber Kontakten aus reinen Metallen, wie z. B. Silber, sind:

- geringe Neigung zum Verschweißen,
- geringer Abrieb durch hohe Härte,
- geringer Abbrand durch die hohe Schmelztemperatur von MgO.

Ausführungsbeispiel 1

für die Herstellung eines Kompositwerkstoffes der Zusammensetzung $Mg_{0,8}Cu_{0,05}Ag_{0,15}$:

Es wurden 8,5 Mol $Mg(OH)_2$-Pulver in 350 ml Wasser eingerührt. Ferner wurden 0,5 Mol kristallines $Cu(NO_3)_2 \cdot 3\,H_2O$ in 350 ml Wasser gelöst. Danach wurden beide Ansätze vereinigt und bei 80 °C 60 min lang gerührt. Dabei läuft die Reaktion

$$8{,}5\ Mg(OH)_2 + 0{,}5\ Cu(NO_3)_2 \rightarrow 0{,}5\ Mg(NO_3)_2 + 0{,}5\ Cu(OH)_2 +$$

$$H_2O + 8\ Mg(OH)_2$$

vollständig nach rechts ab, wobei 0,5 Mol $Cu(OH)_2$ ausfällt und 0,5 Mol $Mg(NO_3)_2$ gebildet wird. Das Fällungsprodukt, in dem $Mg(OH)_2$ und $Cu(OH)_2$ innig gemischt und als sehr feine Partikel vorliegen, wird abgefiltert und 2 x mit Wasser gewaschen, um das gelöste $Mg(NO_3)_2$ vollständig zu entfernen. Das gewaschene Filtrat wird getrocknet und anschließend 2 h lang bei einer Temperatur von 650 °C kalziniert. Dabei wird $Mg(OH)_2$ zu MgO umgesetzt, und $Cu(OH)_2$ zu CuO. Letzteres beginnt in das MgO einzudiffundieren.

Zum Kalzinierungsprodukt wird in einer Polyethylenflasche 0,75 Mol $Ag_2O$-Pulver hinzugefügt, ferner 600 ml Ethanol und 1 kg Mahlkugeln mit einem Durchmesser von 5 mm aus mit Yttrium stabilisierter $ZrO_2$-Keramik. Dieses Gemisch wird mehr als 10 h lang auf einer Rollbank desagglomeriert und gemischt. Als Dispersionsmittel wurden noch 6 g Triethanolamin zugegeben. Nach dem Trocknen des desagglomerierten Gemisches wird dieses abgesiebt und das erhaltene Pulver in einer zylindrischen Stahlmatrize zu Scheiben von 2 mm Dicke und einem Durchmesser von 25 mm gepreßt. Die Sinterung wird an Luft in einem Muffelofen mit folgendem Temperatur-/Zeitprofil ausgeführt:

- Temperaturanstieg von 10 K/min von Zimmertemperatur bis 1010 °C,
- 2 h Haltezeit bei 1010 °C,
- abkühlen auf Zimmertemperatur innerhalb von 24 h.

Oberhalb von 350 °C zerfällt $Ag_2O$ vollständig zu $2\ Ag + 1/2\ O_2$. Der gesinterte Kompositwerkstoff hatte keine offene Porosität und somit eine Dichte von $\geq 96\ \%$. Die lineare Schrumpfung betrug 24 % und die elektrische Leitfähigkeit $5 \cdot 10^4$ $(\Omega cm)^{-1}$.

Ausführungsbeispiel 2

für die Herstellung eines Kompositwerkstoffes der Zusammensetzung $Mg_{0,8}Cu_{0,05}Ag_{0,15}$:

Es wurden 10 Mol $Mg(OH)_2$-Pulver in 400 ml Wasser eingerührt. Ferner wurden 0,5 Mol kristallines $Cu(NO_3)_2 \cdot 3$ $H_2O$ in 350 ml Wasser gelöst und 1,5 Mol $AgNO_3$ in 350 ml Wasser. Beide Lösungen werden zur $Mg(OH)_2$-Suspension rasch hinzugefügt und diese Mischung unter Rühren 1 h lang auf 80 °C erwärmt. Dabei laufen die folgenden Reaktionen:

$$10\ Mg(OH)_2 + 0{,}5\ Cu(NO_3)_2 \rightarrow 0{,}5\ Mg(NO_3)_2 + 0{,}5\ Cu(OH)_2 +$$

$$9{,}5\ Mg(OH)_2$$

und

$$9{,}5\ Mg(OH)_2 + 2\ AgNO_3 \rightarrow 1{,}5\ Mg(NO_3)_2 + 0{,}75\ Ag_2O + 3\ H_2O +$$

$$8\ Mg(OH)_2$$

vollständig nach rechts ab, wobei 0,5 Mol $Cu(OH)_2$ und 0,75 Mol $Ag_2O$ ausfallen und 2 Mol $Mg(NO_3)_2$ gebildet wird. Die Fällungsprodukte liegen als feine Partikel vor und sind innig gemischt mit $Mg(OH)_2$. Die Suspension wurde abgefiltert und 2 x mit Wasser gewaschen, um das gelöste $Mg(NO_3)_2$ vollständig zu entfernen. Das gewaschene Filtrat wurde danach getrocknet und anschließend 2 h lang bei einer Temperatur von 650 °C kalziniert. Dabei wird $Mg(OH)_2$ zu MgO umgesetzt und $Cu(OH)_2$ zu CuO. $Ag_2O$ zerfällt zu $2\ Ag + 1/2\ O_2$, und CuO beginnt in das MgO einzudiffundieren.

Zum Kalzinierungsprodukt wurde in einer Polyethylenflasche zusammen mit 2 kg Mahlkugeln mit einem Durchmesser von 5 mm aus mit Yttrium stabilisierter $ZrO_2$-Keramik auf einer Rollbank desagglomeriert. Als Dispersionsmittel wurden noch 800 ml Ethanol und 5 g Rizinusöl zugegeben.

Nach dem Trocknen des desagglomerierten Gemisches wurde das Gemisch abgesiebt und das erhaltene Pulver in einer zylindrischen Stahlmatrize zu Scheiben von 2 mm Dicke und einem Durchmesser von 25 mm gepreßt. Die Sinterung wurde an Luft in einem Muffelofen mit folgendem Temperatur-/Zeitprofil ausgeführt:

- Temperaturanstieg von 10 K/min von Zimmertemperatur bis 1010 °C,
- 2 h Haltezeit bei 1010 °C,
- abkühlen auf Zimmertemperatur innerhalb von 24 h.

Der gesinterte Kompositwerkstoff hatte keine offene Porosität und somit eine Dichte von $\geq 96$ %. Die elektrische Leitfähigkeit betrug $6 \cdot 10^4$ $(\Omega cm)^{-1}$. Die Fällung von beiden Komponenten, sowohl von CuO als auch von $Ag_2O$ ist vorteilhaft, weil dadurch CuO und Ag sehr kleine Partikel bilden und gleichmäßig im MgO verteilt werden. Damit erhält man gesinterte Kompositwerkstoffe mit einer MgO-Korngröße von $\approx 1$ $\mu m$, die besonders gute mechanische und elektrische Eigenschaften aufweisen. Die mittlere MgO-Korngröße ist jedenfalls $< 3$ $\mu m$.

Wichtig ist, daß das Sintern bei einer Sintertemperatur von $< 1300$ °C, vorzugsweise von $< 1200$ °C, bei einer Sinterdauer von $< 5$ h erfolgt und daß die Temperaturanstiegsgeschwindigkeit von Zimmertemperatur auf die Sintertemperatur $< 50$ K/min ist. Vorzugsweise sollte das Sintern bei einer Sintertemperatur im Temperaturbereich von 980 °C - 1100 °C bei einer Sinterdauer im Bereich von 1,5 h - 2,5 h erfolgen und die Temperaturanstiegsgeschwindigkeit von Zimmertemperatur auf die Sintertemperatur im Bereich von 8 K/min - 50 K/min liegen.

Der erfindungsgemäße Kompositwerkstoff läßt sich mit allen in der Technologie der Keramik bzw. Pulvermetallurgie üblichen Verfahren in die gewünschte Form bringen, z. B. durch Trockenpressen, Naßpressen, Formspritzen und Foliengießen, insbesondere für dünne Platten.

**Patentansprüche**

1. Metall-Keramik-Kompositwerkstoff,
   a) der Silber und Kupferoxid enthält,
   dadurch gekennzeichnet,
   b) daß der Kompositwerkstoff zusätzlich Magnesiumoxid enthält in der Zusammensetzung $(Mg_{1-x}Cu_x)O + Ag_y$ mit

$0,03 \leq x \leq 0,25$ und $0,001 \leq y \leq 0,5$.

**2.** Metall-Keramik-Kompositwerkstoff nach Anspruch 1, dadurch gekennzeichnet, daß $0,05 \leq x \leq 0,2$ ist.

**3.** Metall-Keramik-Kompositwerkstoff nach Anspruch 1 oder 2, dadurch gekennzeichnet, daß die mittlere MgO-Korngröße < 3 µm ist.

**4.** Verfahren zur Herstellung eines Metall-Keramik-Kompositwerkstoffes nach einem der Ansprüche 1 bis 3,

   a) unter Verwendung eines 1. Ausgangsmaterials, das eine Sauerstoffverbindung von Kupfer enthält, ferner
   b) unter Verwendung eines 2. Ausgangsmaterials, das eine Sauerstoffverbindungen von Silber enthält,

dadurch gekennzeichnet,

   c) daß ein 3. Ausgangsmaterial hinzugefügt wird, das eine Sauerstoffverbindung von Magnesium enthält, und
   d) daß ein Reaktionsprodukt aus diesen 3 Ausgangsmaterialien nur einer Sinterung unterworfen wird.

**5.** Verfahren nach Anspruch 4, dadurch gekennzeichnet,

   a) daß das 1. Ausgangsmaterial eine wässrige Lösung von $Cu(NO_3)_2$ enthält und
   b) zu dem 3. Ausgangsmaterial, das eine wässrige Suspension von $Mg(OH)_2$ enthält, hinzugefügt wird.

**6.** Verfahren nach Anspruch 4 oder 5, dadurch gekennzeichnet,

   a) daß ein Fällungsprodukt aus einer Reaktion mindestens der 1. und 3. Ausgangsmaterialien abgefiltert,
   b) danach in Wasser gewaschen und
   c) nach einer Trocknung kalziniert wird, bevor es der Sinterung unterworfen wird.

**7.** Verfahren nach Anspruch 6, dadurch gekennzeichnet,

   a) daß das Kalzinierungsprodukt mit Mahlkugeln desagglomeriert,
   b) danach im Vakuum getrocknet und
   c) anschließend gepreßt wird, bevor es der Sinterung unterworfen wird.

**8.** Verfahren nach einem der Ansprüche 6 oder 7, dadurch gekennzeichnet,

   a) daß das 2. Ausgangsmaterial als wässrige Lösung von $AgNO_3$ vor dem Abfiltern der Fällungsprodukte zu den 1. und 3. Ausgangsmaterialien hinzugefügt wird oder
   b) daß das 2. Ausgangsmaterial als $Ag_2O$-Pulver dem Kalzinierungsprodukt zugefügt wird.

**9.** Verfahren nach einem der Ansprüche 4 bis 8, dadurch gekennzeichnet,

   a) daß das Sintern bei einer Sintertemperatur von < 1200 °C
   b) bei einer Sinterdauer von < 5 h erfolgt und
   c) daß die Temperaturanstiegsgeschwindigkeit von Zimmertemperatur auf die Sintertemperatur < 50 K/min ist,
   d) insbesondere, daß das Sintern bei einer Sintertemperatur im Temperaturbereich von 980 °C - 1100 °C
   e) bei einer Sinterdauer im Bereich von 1,5 h - 2,5 h erfolgt und
   f) daß die Temperaturanstiegsgeschwindigkeit von Zimmertemperatur auf die Sintertemperatur im Bereich von 8 K/min - 50 K/min liegt.

**10.** Verwendung eines Metall-Keramik-Kompositwerkstoffes nach einem der Ansprüche 1 bis 3

   a) mit $0,001 \leq y \leq 0,03$ für Werkstoffe mit guter elektrischer Isolierfähigkeit und verbesserter Bruchzähigkeit,
   b) mit $0,01 \leq y \leq 0,1$ für Werkstoffe mit hoher Bruchzähigkeit, für reibungsarme, selbstschmierende Werkstoffe in mechanischen Gleitlagern, insbesondere aus Keramik,
   c) mit $0,1 \leq y \leq 0,2$ für elektrische Kontaktwerkstoffe in Hochtemperatur-Brennstoffzellen und für abriebfreie, verschweißfreie elektrische Kontakte, insbesondere Gleitkontakte, sowie
   d) mit $0,15 \leq y \leq 0,5$ für Werkstoffe mit hoher elektrischer und thermischer Leitfähigkeit bei guter mechanischer

Festigkeit.

Europäisches
Patentamt

Nummer der Anmeldung
EP 96 81 0766

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 252 492 A (FUJI ELECTRIC CO LTD ;TOKURIKI HONTEN KK (JP)) 13.Januar 1988 * das ganze Dokument * --- | 1-10 | C04B35/74 H01H1/02 C22C32/00 C22C1/10 B22F9/30 |
| A | DATABASE WPI Section Ch, Week 9002 Derwent Publications Ltd., London, GB; Class L03, AN 90-014236 XP002026365 & SU 1 470 465 A (YUDIN B A) , 7.April 1989 * Zusammenfassung * --- | 1-10 | |
| A | GB 2 022 145 A (SIEMENS AG) 12.Dezember 1979 * Ansprüche; Beispiel 3 * --- | 1,10 | |
| A | DATABASE WPI Section Ch, Week 8140 Derwent Publications Ltd., London, GB; Class L03, AN 81-72405D XP002026366 & JP 56 102 536 A (TANAKA DIE CAST LTD) , 17.August 1981 * Zusammenfassung * --- | 1,2,10 | |
| A | DATABASE WPI Section Ch, Week 8701 Derwent Publications Ltd., London, GB; Class E17, AN 87-006122 XP002026367 & SU 1 232 278 A (AS SIBE CATALYSIS) , 23.Mai 1986 * Zusammenfassung * --- | 1,2,10 | |

RECHERCHIERTE SACHGEBIETE (Int.Cl.6)

C22C
H01H
B22F

-/--

Der vorliegende Recherchenbericht wurde für alle Patentansprüche erstellt

| Recherchenort | Abschlußdatum der Recherche | Prüfer |
|---|---|---|
| DEN HAAG | 27.Februar 1997 | Harbron, J |

| | Europäisches Patentamt | **EUROPÄISCHER RECHERCHENBERICHT** | Nummer der Anmeldung EP 96 81 0766 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | CHEMICAL ABSTRACTS, vol. 113, no. 2, 9.Juli 1990 Columbus, Ohio, US; abstract no. 16171, ADACHI, SEIJI ET AL: "Electrically conductive metal oxide containing silver and copper" XP002026364 * Zusammenfassung * & JP 02 021 505 A (MATSUSHITA ELECTRIC INDUSTRIAL CO., LTD., JAPAN) --- | 1-3,9,10 | |
| A | US 4 023 961 A (DOUGLAS PETER ET AL) 17.Mai 1977 ----- | | |
| | | | RECHERCHIERTE SACHGEBIETE (Int.Cl.6) |

Der vorliegende Recherchenbericht wurde für alle Patentansprüche erstellt

| Recherchenort | Abschlußdatum der Recherche | Prüfer |
|---|---|---|
| DEN HAAG | 27.Februar 1997 | Harbron, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

........................................................................
& : Mitglied der gleichen Patentfamilie, übereinstimmendes Dokument

EPO FORM 1503 03.82 (P04C03)